# DEMANDE DE BREVET EUROPEEN

(11) **EP 2 693 660 A2**
(43) Date de publication de la demande: **05.02.2014**
(21) Numéro de dépôt: 13179058.6
(22) Date de dépôt: 02.08.2013
(51) Int. Cl.: H04B 7/185, H04W 56/00

(54) **Procédé et système de synchronisation**

(30) Priorité: 03.08.2012 FR 1202182
(71) Demandeur: Thales, 92200 Neuilly Sur Seine (FR)
(72) Inventeur: Touret, Marc, 92622 Gennevilliers Cedex (FR); Menigand, Thierry, 92622 Gennevilliers Cedex (FR); Coutolleau, Marc, 92622 Gennevilliers Cedex (FR)
(74) Mandataire: Brunelli, Gérald

(57) **Abrégé**

Procédé d'émission d'un signal de synchronisation fréquentielle comportant une première étape de détermination d'au moins deux premières fréquences d'émission respectivement associées à au moins deux premiers intervalles séparés temporellement d'une première durée. Lesdits premiers intervalles temporels sont de durée identique. Lesdites premières durées sont identiques pour des premières fréquences identiques et lesdites premières durées sont différentes pour des premières fréquences différentes. Le procédé comporte aussi une deuxième étape d'émission d'au moins un signal de synchronisation dans lesdits premiers intervalles temporels et en utilisant ladite première fréquence, le signal émis dans lesdits premiers intervalles étant identique

## Description

La présente invention concerne un procédé permettant la synchronisation fréquentielle d'un terminal satellitaire avec un satellite ou une station terrestre. L'ensemble de ces éléments appartenant à un même système de transmission de données satellitaires.

Il est connu dans l'état de la technique des procédés de pointage satellitaire utilisant un signal de synchronisation basé sur une séquence pseudo aléatoire modulée. Cette modulation peut par exemple être réalisée en utilisant une modulation de phase à deux états (connus aussi sous le nom de BPSK pour Binary Phase Shift Keying en Anglais). Ce signal de synchronisation, émis dans un ou plusieurs intervalles temporels, est aussi connu dans l'état de la technique sous le nom de balise.

Cependant comme les terminaux satellitaires bas coût comprennent généralement un oscillateur local avec de faibles performances, les terminaux présentent généralement un décalage de fréquence avec le satellite ou la station terrestre de plusieurs kHz, auquel s'ajoute un éventuel décalage provoqué par l'effet Doppler.

Ces décalages en fréquence ralentissent la synchronisation entre le terminal satellitaire et le satellite ou la station terrestre. En effet, il est nécessaire que le terminal effectue plusieurs hypothèses sur ce possible décalage en fréquence. Le temps nécessaire à la synchronisation va donc dépendre de la puissance de calcul disponible dans le terminal satellitaire et du nombre d'hypothèses à réaliser. Par exemple si le récepteur doit chercher le signal de synchronisation dans une plage de 50kHz par pas de 1 kHz, il est nécessaire que le terminal satellitaire réalise 101 hypothèses sur le décalage en fréquence. Si chaque hypothèse nécessite un calcul de 10 secondes, le temps de synchronisation total est de 17 minutes environ. De plus la puissance de calcul, nécessaire pour une première synchronisation, est en général supérieure à la puissance de calcul nécessaire pour suivre cette synchronisation. La puissance de calcul utilisée pour le processus de synchronisation initiale est donc sous-utilisée durant la majeure partie du temps.

La présente invention vise donc à remédier à ces problèmes en proposant un procédé et un système de synchronisation fréquentielle limitant la puissance de calcul et le temps nécessaire à la réalisation de cette synchronisation fréquentielle.

Ainsi il est proposé, selon un aspect de l'invention, un procédé d'émission d'un signal de synchronisation fréquentielle comportant une première étape de détermination d'au moins deux premières fréquences d'émission respectivement associées à au moins un premier ensemble d'au moins deux premiers intervalles temporels séparés temporellement d'une première durée. Lesdits premiers intervalles temporels sont de durée identique. Lesdites premières durées sont identiques pour des premières fréquences identiques et lesdites premières durées sont différentes pour des premières fréquences différentes. Le procédé comporte aussi une deuxième étape d'émission d'un signal de synchronisation dans les premiers intervalles temporels et en utilisant respectivement la première fréquence associée à l'intervalle temporel. Ledit signal de synchronisation émis dans les différents premiers intervalles est identique.

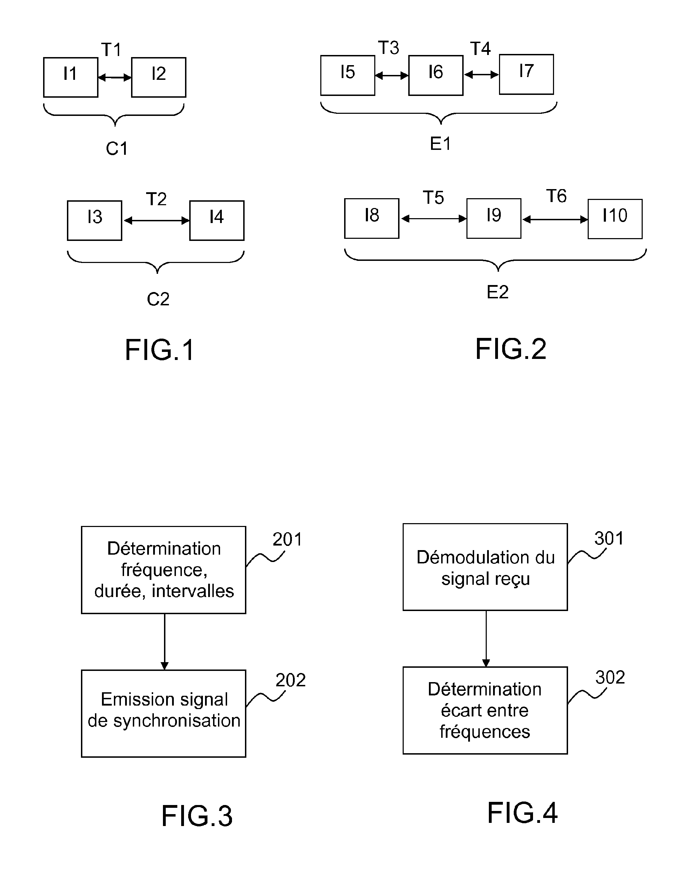

Le procédé d'émission proposé, permet donc l'émission d'un signal de synchronisation ayant une largeur spectrale supérieure par rapport à un procédé normal. La figure 1 illustre l'émission d'un signal de synchronisation dans quatre intervalles temporels. Ces intervalles temporels sont regroupés dans deux premiers ensembles C1 et C2. Le premier ensemble C1 comporte les intervalles temporels I1 et I2 et le premier ensemble C2 comporte les intervalles temporels I3 et I4. Les signaux émis dans les intervalles temporels du premier ensemble C1 utilisent une bande de fréquence F1 et les signaux émis dans les intervalles temporels du premier ensemble C2 utilisent une bande de fréquence F2. De plus les deux intervalles temporels du premier ensemble C1 sont séparés de la durée T1 et les deux intervalles temporels du premier ensemble C2 sont séparés de la durée T2 différente de la durée T1. Donc les deux fréquences F1 et F2 utilisées pour émettre un signal dans les intervalles temporels des premiers ensembles C1 et C2 sont déterminables par comparaison de la durée séparant les deux intervalles temporels (I1 et I2 ou I3 et I4) d'un même couple d'intervalles temporels.

Selon une caractéristique technique, la première étape du procédé d'émission est adaptée pour déterminer au moins deux premières fréquences dont la séparation spectrale est supérieure à la largeur de bande d'étalement spectrale du signal de synchronisation.

Cette caractéristique technique permet l'émission d'un signal de synchronisation ayant une largeur spectrale double par rapport à un procédé normal.

Avantageusement les premiers intervalles temporels appartiennent à un ensemble d'intervalles temporels contigus.

Avantageusement le plus petit commun multiple des premières durées T1 est supérieur à un seuil.

Le plus petit commun multiple, connu aussi sous le nom de PPCM, de deux entiers non nuls *a* et *b* est le plus petit entier strictement positif qui soit à la fois multiple *a* et de *b*. De manière optimale le seuil est égal au nombre de premières fréquences multiplié par la durée des premiers intervalles temporels.

Selon une autre caractéristique technique lesdites premières fréquences sont respectivement associées à au moins trois premiers intervalles temporels séparés temporellement de deux premières durées

Si ces intervalles temporels sont notés A, B et C et sont classés par ordre chronologique, ces deux durées peuvent être la durée entre A et B, et la durée entre B à C. Il est aussi possible de définir à la place de la durée entre A et B ou la durée entre B et C, la durée entre A et C.

Cette caractéristique technique permet d'améliorer les performances de réception du signal de synchronisation en évitant en particulier les ambigüités et en limitant les erreurs d'estimation temporelle.

La figure 2 illustre un mode de réalisation dans lequel l'émission d'un signal de synchronisation est réalisée dans six intervalles temporels (I5 à I10). Ces intervalles temporels sont regroupés dans deux premiers ensembles (E1 et E2). Le premier ensemble E1 comporte trois premiers intervalles temporels (I5 à I7). Les premiers intervalles I5 et I6 sont séparés d'une durée T3 et les premiers intervalles I6 et I7 sont séparés d'une durée T4. Le premier ensemble E2 comporte trois premiers intervalles temporels (I8 à I10). Les premiers intervalles I8 et I9 sont séparés d'une durée T5 et les premiers intervalles I9 et I10 sont séparés d'une durée T6. Les premiers intervalles du premier ensemble E1 sont émis en utilisant la première fréquence F1 et les premiers intervalles du premier ensemble E2 sont émis en utilisant la première fréquence F2.

Ainsi il est également proposé, selon un aspect de l'invention, un procédé de réception comportant une première étape de démodulation du signal reçu, la démodulation est réalisée en utilisant une deuxième fréquence. Le procédé de réception comporte aussi une deuxième étape de détermination de l'écart entre au moins une des premières fréquences et la deuxième fréquence par détermination d'au moins deux deuxièmes intervalles temporels dans lesquels l'énergie du signal démodulé est maximale.

Le procédé de réception proposé permet donc de déterminer la première fréquence qui a été utilisée pour l'émission du signal de synchronisation dans le couple d'intervalles temporels. Cette détermination est réalisée à partir de la durée séparant les deux intervalles temporels du couple. Le procédé de réception utilise également le fait que les signaux de synchronisation sont identiques et de ce fait il ne nécessite qu'une seule corrélation avec un signal de synchronisation. Il n'est pas nécessaire de faire plusieurs corrélations associées à différents signaux de synchronisation.

Avantageusement la deuxième étape du procédé de réception est en outre adaptée pour la détermination d'une deuxième durée séparant les deux deuxièmes intervalles et/ou la comparaison entre la deuxième durée et lesdites premières durées

Avantageusement la deuxième étape du procédé de réception est en outre adaptée pour la détermination d'au moins trois deuxièmes intervalles temporels dans lesquels l'énergie dudit signal démodulé est maximale et/ou pour la détermination de deux deuxièmes durées séparant les deux deuxièmes intervalles et/ou la comparaison entre lesdites deuxièmes durées et lesdites premières durées.

Il est de plus proposé un système de synchronisation fréquentielle comportant au moins un satellite et/ou au moins une station terrestre apte à émettre un signal de synchronisation fréquentielle en utilisant le procédé d'émission précédant. Le système comporte aussi au moins un terminal satellitaire apte à recevoir un signal de synchronisation fréquentielle en utilisant le procédé de réception.

L'invention sera mieux comprise et d'autres avantages apparaîtront à la lecture de la description détaillée faite à titre d'exemple non limitatif et à l'aide des figures parmi lesquelles :
La figure 1 illustre l'émission d'un signal de synchronisation dans quatre intervalles temporels
La figure 2 illustre l'émission d'un signal de synchronisation dans six intervalles temporels

- la figure 3 présente le procédé d'émission selon un aspect de l'invention
- la figure 4 présente le procédé de réception selon un aspect de l'invention
- la figure 5 présente la deuxième étape du procédé de réception selon un aspect de l'invention
- la figure 6 présente le système selon un aspect de l'invention

Le procédé d'émission décrit sur la figure 3 comporte une première étape 201 de détermination d'au moins deux fréquences d'émission. Chacune de ces fréquences est associée à une première durée qui sépare deux intervalles temporels utilisant cette fréquence. Cette première étape comporte aussi la sélection d'au moins un couple de premiers intervalles temporels séparés de la première durée. Le procédé d'émission comporte aussi une deuxième étape 202 d'émission d'un signal de synchronisation dans chacun des deux premiers intervalles temporels du couple et en utilisant la première fréquence associée à chaque couple. Ce signal est généralement une séquence pseudo aléatoire, modulée en utilisant une modulation à deux états, connue sous le nom de BPSK

Afin que le procédé de réception fonctionne il est nécessaire que les premières durées associées à deux couples soient différentes. De manière optimale il est nécessaire que cette différence soit supérieure à dix fois la fréquence symbole du signal de synchronisation en bande de base.

Le procédé d'émission consiste donc à émettre un signal de synchronisation (connu aussi sous le nom de balise dans l'état de la technique) dans un couple d'intervalles temporels. Les signaux émis dans des couples d'intervalles temporels différents le sont avec une fréquence différente. Le procédé d'émission permet donc d'émettre sur une bande de fréquence plus importante que lors de l'émission de signaux de synchronisation utilisant une seule fréquence. De plus du fait de la relation entre la durée séparant deux intervalles temporels utilisés pour émettre des signaux et la fréquence utilisée pour cette émission, le récepteur peut déterminer la première fréquence utilisée pour l'émission des signaux d'un couple d'intervalles temporels à partir de la durée séparant ces deux intervalles temporels.

La figure 1 illustre l'émission d'un signal de synchronisation dans quatre intervalles temporels. Ces intervalles temporels sont regroupés dans deux premiers ensembles C1 et C2. Le premier ensemble C1 comporte les intervalles temporels I1 et I2 et le premier ensemble C2 comporte les intervalles temporels I3 et I4. Les signaux émis dans les intervalles temporels du premier ensemble C1 utilisent une bande de fréquence F1 et les signaux émis dans les intervalles temporels du premier ensemble C2 utilisent une bande de fréquence F2. De plus les deux intervalles temporels du premier ensemble C1 sont séparés de la durée T1 et les deux intervalles temporels du premier ensemble C2 sont séparés de la durée T2. Donc les deux fréquences F1 et F2 utilisées pour émettre un signal dans les intervalles temporels des premiers ensembles C1 et C2 sont déterminables par comparaison de la durée séparant les deux intervalles temporels (I1 et I2 ou I3 et I4) d'un même couple d'intervalles temporels.

Dans un mode de réalisation il est possible de déterminer des premières fréquences qui soient séparées spectralement d'une largeur supérieure à la largeur de la bande d'étalement du signal de synchronisation.

Dans un autre mode de réalisation il est possible que les premiers intervalles temporels appartiennent à un ensemble d'intervalles contigus.

Dans un mode de réalisation les premières durées sont choisies de manière à ce que le plus petit commun multiple de ces premières durées soit supérieur à un seuil égal au nombre de premières fréquences multiplié par la durée des premiers intervalles temporels.

La figure 2 illustre un mode de réalisation dans lequel l'émission d'un signal de synchronisation est réalisée dans six intervalles temporels (I5 à I10). Ces intervalles temporels sont regroupés dans deux premiers ensembles (E1 et E2). Le premier ensemble E1 comporte trois premiers intervalles temporels (I5 à I7). Les premiers intervalles I5 et I6 sont séparés d'une durée T3 et les premiers intervalles I6 et I7 sont séparés d'une durée T4. Le premier ensemble E2 comporte trois premiers intervalles temporels (I8 à I10). Les premiers intervalles I8 et I9 sont séparés d'une durée T5 et les premiers intervalles I10 et I11 sont séparés d'une durée T6. Les premiers intervalles du premier ensemble E1 sont émis en utilisant la première fréquence F1 et les premiers intervalles du premier ensemble E2 sont émis en utilisant la première fréquence F2.

Le procédé de réception décrit sur la figure 4 comporte une première étape 301 de démodulation du signal reçu. Cette démodulation est réalisée en considérant que la bande d'étalement fréquentielle du signal reçu est centrée sur une deuxième fréquence. Différents démodulateurs sont connus dans l'état de la technique. Ce procédé de réception comporte aussi une deuxième étape 302 qui permet de déterminer l'écart entre au moins une première fréquence utilisée pour l'émission du signal de synchronisation et la deuxième fréquence.

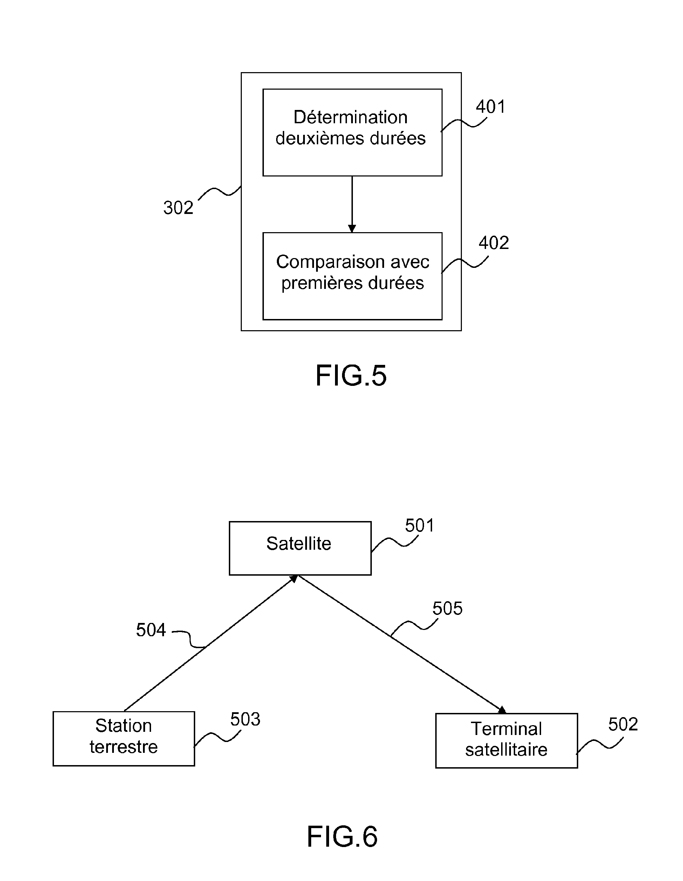

Cette deuxième étape est séparée en deux sous étapes telles que présentées figure 5. Une première sous-étape 401 qui permet la détermination de deux deuxièmes intervalles temporels dans lesquels l'énergie du signal démodulé est maximale. Cette étape comporte aussi le calcul d'une deuxième durée séparant ces deux deuxièmes intervalles temporels. Une deuxième sous-étape 402 compare alors cette deuxième durée avec les premières durées associées aux différentes premières fréquences. Cette étape permet de déterminer la première fréquence qui a été utilisée pour émettre les signaux de synchronisation, dans ces deux deuxièmes intervalles temporels. Le récepteur peut alors synchroniser ses oscillateurs locaux afin que la deuxième fréquence de démodulation dépende d'une des premières fréquences d'émission des signaux de synchronisation.

Ainsi en d'autres termes le procédé de l'invention permet, à l'émission, la mise en correspondance de chaque fréquence d'émission avec une durée séparant les intervalles sur lesquels le signal de synchronisation utilisant cette fréquence est émis. Une durée différente est définie pour chacune des différentes fréquences. Cette mise en correspondance peut par exemple être réalisée via une table de correspondance.

Ensuite durant la réception, le récepteur détecte les intervalles temporels pour lesquels la puissance du signal est maximale et détermine la durée séparant ces intervalles temporels dans lesquels la puissance du signal est maximale. Ensuite le récepteur peut faire la correspondance inverse de celle réalisée à l'émission et ainsi retrouver la fréquence d'émission du signal de synchronisation. Cette mise en correspondance inverse peut par exemple être réalisée via une table de correspondance.

La figure 6 présente un système utilisant le procédé d'émission et le procédé de réception. Ce système comporte un satellite 501, une station terrestre 502 et un terminal satellitaire 503.

Dans un mode de réalisation de ce système la station terrestre génère le signal de synchronisation fréquentielle en utilisant le procédé d'émission et l'envoie au satellite via la liaison 504. Ce signal est ensuite répété par le satellite et transmis au terminal satellitaire via la liaison 505. Le terminal satellitaire est alors apte à réaliser le procédé de réception.

Dans un autre mode de réalisation le satellite est adapté pour généré le signal de synchronisation en utilisant le procédé d'émission et l'envoie au terminal satellitaire via la liaison 505. Le terminal satellitaire est alors apte à réaliser le procédé de réception.

## Revendications

1. Procédé d'émission d'un signal de synchronisation fréquentielle comportant ;
- une première étape (201) de détermination d'au moins deux premières fréquences d'émission respectivement associées à au moins deux premiers intervalles séparés temporellement d'une première durée, lesdits premiers intervalles étant de durée identique, lesdites premières durées étant identique pour des premières fréquences identiques et lesdites premières durées étant différente pour des premières fréquences différentes,
- une deuxième étape (202) d'émission d'au moins un signal de synchronisation dans lesdits premiers intervalles temporels et en utilisant ladite première fréquence, le signal émis dans lesdits premiers intervalles étant identique.

2. Procédé d'émission selon la revendication 1 dans lequel ladite première étape (201) est adaptée pour déterminer au moins deux fréquences dont la séparation spectrale est supérieur à la largeur de bande d'étalement spectrale du signal de synchronisation

3. Procédé d'émission selon la revendication 1 ou 2 dans lequel lesdits premiers intervalles temporels appartiennent à un ensemble d'intervalles temporels contigus.

4. Procédé d'émission selon l'une des revendications 1 à 3 dans lequel le plus petit commun multiple des premières durées est supérieur à un seuil.

5. Procédé d'émission selon l'une des revendications 1 à 4 dans lequel lesdites premières fréquences sont respectivement associées à au moins trois premiers intervalles temporels séparés temporellement de deux premières durées

6. Procédé de réception d'un signal de synchronisation fréquentielle émis en utilisant au moins deux premières fréquences et dans deux couples d'intervalles temporels séparés d'un première durée différente pour chaque fréquence comportant;
- une première étape (301) de démodulation du signal reçu, ladite démodulation est réalisée en utilisant une deuxième fréquence
- une deuxième étape (302) de détermination de l'écart entre au moins une des premières fréquences et ladite deuxième fréquence par détermination d'au moins deux deuxièmes intervalles temporels dans lesquels l'énergie dudit signal démodulé est maximale

7. Procédé de réception selon la revendication 6 dans lequel ladite deuxième étape (302) est en outre adaptée pour la détermination d'une deuxième durée séparant les deux deuxièmes intervalles et/ou la comparaison entre ladite deuxième durée et lesdites premières durées

8. Procédé de réception selon la revendication 6 et 7 dans lequel ladite deuxième étape (302) est en outre adaptée pour la détermination d'au moins trois deuxièmes intervalles temporels dans lesquels l'énergie dudit signal démodulé est maximale et/ou pour la détermination de deux deuxièmes durées séparant les deux deuxièmes intervalles et/ou la comparaison entre lesdites deuxième durées et lesdites premières durées

9. Système de synchronisation fréquentielle comportant ;
- au moins un satellite (501) et/ou au moins une station terrestre (503) apte à émettre un signal de synchronisation fréquentielle selon l'une des revendications 1 à 5 et
- au moins un terminal satellitaire (502) apte à recevoir un signal de synchronisation fréquentielle selon l'une des revendications 6 à 8.
